# EUROPEAN PATENT APPLICATION

(11) **EP 2 477 254 A1**
(43) Date of publication of application: **18.07.2012**
(21) Application number: 11275154.0
(22) Date of filing: 02.12.2011
(51) Int. Cl.: H01M 2/12

(54) **Gas venting structure for energy storage device and energy storage device including the same**

(30) Priority: 18.01.2011 KR 20110004957
(71) Applicant: Samsung Electro-Mechanics Co., Ltd, Suwon, Gyunggi-Do (KR)
(72) Inventor: Cho, Yeong Su, 471-716 Gyeonggi-do (KR); Jung, Chang Ryul, 157-221 Seoul (KR); Bae, Jun Hee, 442-070 Gyeonggi-do (KR); Kim, Bae Kyun, 463-772 Gyeonggi-do (KR); Jung, Hyun Chul, 448-972 Gyeonggi-do (KR)
(74) Representative: Powell, Timothy John

(57) **Abstract**

The present invention relates to a gas venting structure for an energy storage device including: a bolt consisting of a body and a head and having an outlet inside to pass gas therethrough; a case having a bolt insertion hole inside to insert the bolt therein; and a barrier coupled with the case to block the outlet of the bolt, and an energy storage device including the same.

## Description

### CROSS-REFERENCE TO RELATED APPLICATIONS

Claim and incorporate by reference domestic priority application and foreign priority application as follows:

### "CROSS REFERENCE TO RELATED APPLICATION

This application claims the benefit under 35 U.S.C. Section 119 of Korean Patent Application Serial No. 10-2011-0004957, entitled filed January 18, 2011, which is hereby incorporated by reference in its entirety into this application."

### BACKGROUND OF THE INVENTION

### 1. Field of the Invention

The present invention relates to a gas venting structure for an energy storage device and an energy storage device including the same.

### 2. Description of the Related Art

In recent times, various mobile electronic products have been released according to the technological development in the field of electrical and electronic communications, and the application range of energy storage devices such as secondary batteries has been increased.

Further, as concerns about environmental issues and resource issues have been increased, competition for development of vehicles using environment-friendly energy or environment-friendly energy production related technologies such as solar power generation is fierce.

Up to now, the most widely used representative electrical energy storage device is a secondary battery that can be used for a long time through charging and discharging. Since the secondary battery can maintain its output at a constant voltage for a relatively long time and be miniaturized and lightweight, it has already been widely used as a power storage device of small mobile devices.

Meanwhile, in case of the secondary battery, since there are disadvantages such as relatively long charging and discharging time, low output voltage of about 3V, short life, and danger of explosion, there is a limit to fields of application.

There is an increasing interest in a supercapacitor, which is charged and discharged by an electrochemical mechanism, as an energy storage device for supplementing the disadvantages of the secondary battery.

There are various kinds of supercapacitors such as electric double layer capacitors (EDLCs), hybrid capacitors, and pseudocapacitors, and the supercapacitors have advantages such as high output characteristics and long life compared to the secondary battery.

Based on the above advantages, studies have been continued to use the supercapacitors for regenerative braking of vehicles and so on.

Meanwhile, the energy storage devices such as secondary batteries and supercapacitors have an electrolytic solution (or electrolyte) between electrodes and are charged and discharged by an electrochemical mechanism. At this time, various gases may be generated. When it is impossible to properly vent these gases, a case of the energy storage device is ruptured and thus can not be used anymore or there is a danger of explosion in severe cases.

In case of the supercapacitors, they have not been smoothly commercialized until now since problems such as energy density, resistance, and so on are not completely solved. However, it is expected that the supercapacitors will be commercialized in the near future.

However, the need for solving the above-described problems such as reduction of reliability and shortening of life due to the generation of gas is increasing.

FIG. 1 illustrates a configuration of a valve in accordance with Korean Patent Application No. 2003-47556 provided to solve the above problems.

Referring to FIG. 1, the air valve disclosed in the above patent document employs a method of venting gas by rupturing a metal film 1 when pressure rises due to gas generated inside an energy storage device. In case of applying this method, there are problems that the configuration of the air valve is complicated and many components are needed.

### SUMMARY OF THE INVENTION

The present invention has been invented in order to overcome the above-described problems and it is, therefore, an object of the present invention to provide a gas venting structure for an energy storage device capable of being simply implemented with minimum components while maintaining internal pressure of an energy storage device within a predetermined range, and an energy storage device including the same.

In accordance with one aspect of the present invention to achieve the object, there is provided a gas venting structure for an energy storage device including: a bolt consisting of a body and a head and having an outlet inside to pass gas therethrough; a case having a bolt insertion hole inside to insert the bolt therein; and a barrier coupled with the case to block the outlet of the bolt.

At this time, a coupling portion may be further provided on an outer surface of the body of the bolt to couple the bolt and the case, and a coupling groove may be further provided on an inner surface of the case to be coupled with the coupling portion.

Further, engaging projections may be provided at both ends of the barrier, and concave grooves may be provided in the case to insert the engaging projections therein.

Further, the barrier may be made of a metal or synthetic resin material.

Further, an O-ring may be further provided between the head of the bolt and a connecting portion of the case.

Further, the barrier may be coupled to a bottom surface of the bolt to seal the outlet.

Further, the barrier may be coupled to the entire bottom surface and all or a portion of side surfaces of the bolt to seal the outlet.

Further, the O-ring may be made of a butyl material.

Further, the barrier may be made of an aluminum foil with a thickness of 10 to 100µm or corrosion-resistant rubber with a thickness of 5 to 100µm.

Meanwhile, an energy storage device in accordance with an embodiment of the present invention may include the above-described gas venting structure for an energy storage device.

### BRIEF DESCRIPTION OF THE DRAWINGS

These and/or other aspects and advantages of the present general inventive concept will become apparent and more readily appreciated from the following description of the embodiments, taken in conjunction with the accompanying drawings of which:

FIG. 1 is a cross-sectional view showing an air valve for venting gas of a conventional energy storage device;

FIG. 2 is a cross-sectional view showing a gas venting structure of an energy storage device in accordance with an embodiment of the present invention;

FIG. 3 is a cross-sectional view of a bolt in accordance with an embodiment of the present invention;

FIG. 4 is a cross-sectional view of a case in accordance with an embodiment of the present invention;

FIG. 5 is a view showing a plane taken along line I-I' of FIG. 2;

FIG. 6 is a cross-sectional view showing a configuration in accordance with an embodiment of the present invention;

FIG. 7 is a cross-sectional view showing a configuration in accordance with an embodiment of the present invention;

FIG. 8 is a cross-sectional view showing a configuration in accordance with an embodiment of the present invention; and

FIG. 9 is a view showing an example in which the gas venting structure for an energy storage device in accordance with an embodiment of the present invention is applied to an energy storage device.

### DETAILED DESCRIPTION OF THE PREFERABLE EMBODIMENT

Advantages and features of the present invention and methods of accomplishing the same will be apparent by referring to embodiments described below in detail in connection with the accompanying drawings. However, the present invention is not limited to the embodiments disclosed below and may be implemented in various different forms. The embodiments are provided only for completing the disclosure of the present invention and for fully representing the scope of the present invention to those skilled in the art. Like reference numerals refer to like elements throughout the specification.

Terms used herein are provided to explain embodiments, not limiting the present invention. Throughout this specification, the singular form includes the plural form unless the context clearly indicates otherwise. Further, terms "comprises" and/or "comprising" used herein specify the existence of described components, steps, operations, and/or elements, but do not preclude the existence or addition of one or more other components, steps, operations, and/or elements.

Hereinafter, configuration and operational effect of the present invention will be described in detail with reference to the accompanying drawings.

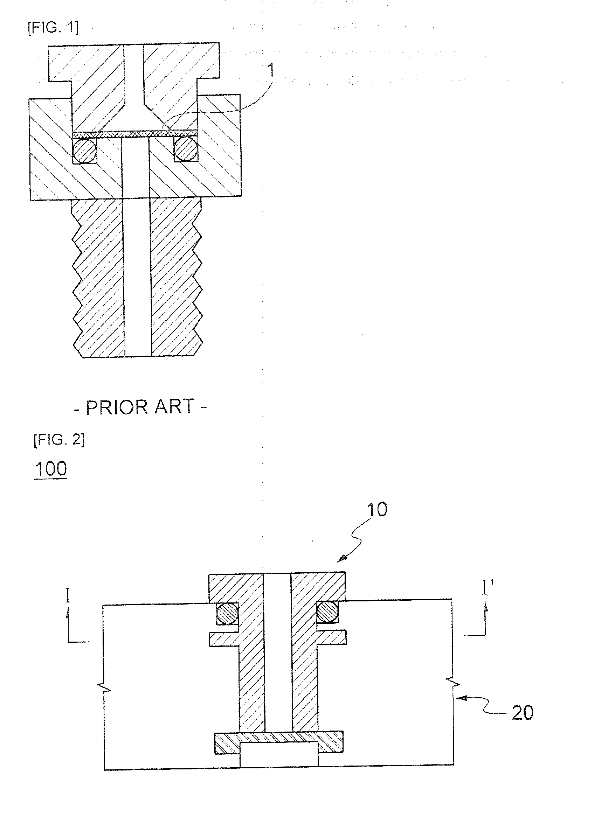

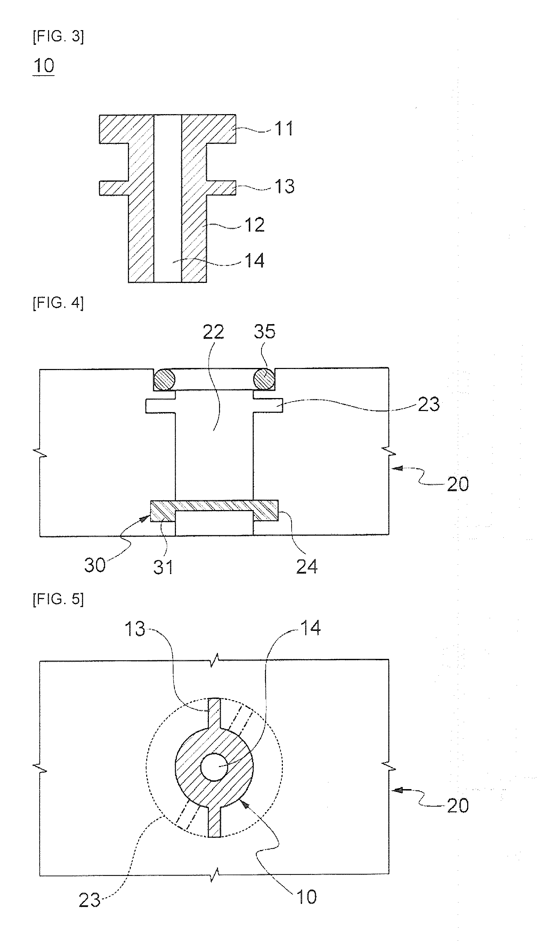

FIG. 2 is a cross-sectional view showing a gas venting structure for an energy storage device in accordance with an embodiment of the present invention, FIG. 3 is a cross-sectional view of a bolt in accordance with an embodiment of the present invention, and FIG. 4 is a cross-sectional view of a case in accordance with an embodiment of the present invention.

Referring to FIGS. 2 and 3, a gas venting structure for an energy storage device in accordance with an embodiment of the present invention may include a bolt, a case, and a barrier.

The case includes a bolt insertion hole having a shape corresponding to the shape of the bolt and may be directly applied to a top plate of a case of an energy storage device and so on.

The bolt may be formed in various shapes such as cylinder, polygonal pillar, oval pillar, cone, oval cone, and polygonal pyramid. At this time, an outlet is provided inside the bolt from a bottom surface through a top surface of the bolt to pass gas therethrough.

Meanwhile, similarly to the shape of a typical bolt, the bolt may consist of a head and a body.

Further, the bolt and the case may be firmly coupled and fixed by a coupling portion provided on an outer surface of the body of the bolt and a coupling groove provided on an inner surface of the case in correspondence to the coupling portion.

FIG. 5 is a view showing a plane taken along line I-I' of FIG. 2.

Referring to FIG. 5, it is possible to check that the bolt is fixed to the case by rotating the bolt in a clockwise direction after inserting the bolt in the case.

At this time, various coupling structures are allowable in addition to the embodiment shown in FIG. 5.

Meanwhile, engaging projections are provided at both ends of the barrier and concave grooves are provided in the case to insert the engaging projections therein so that the barrier is fixed to the case.

At this time, it is preferable to prevent gas from leaking through a coupling surface between the engaging projection and the concave groove of the case by improving sealing of the coupling surface between the engaging projection and the concave groove of the case.

Further, the barrier may be made of a metal or synthetic resin material, and it is more preferred that the barrier is made of a synthetic resin material to improve the sealing between the engaging projection and the concave groove of the case.

Meanwhile, when the barrier is made of metal and so on or when the sealing between the engaging projection and the concave groove of the case is low, it is possible to prevent a gas leakage by providing a separate O-ring.

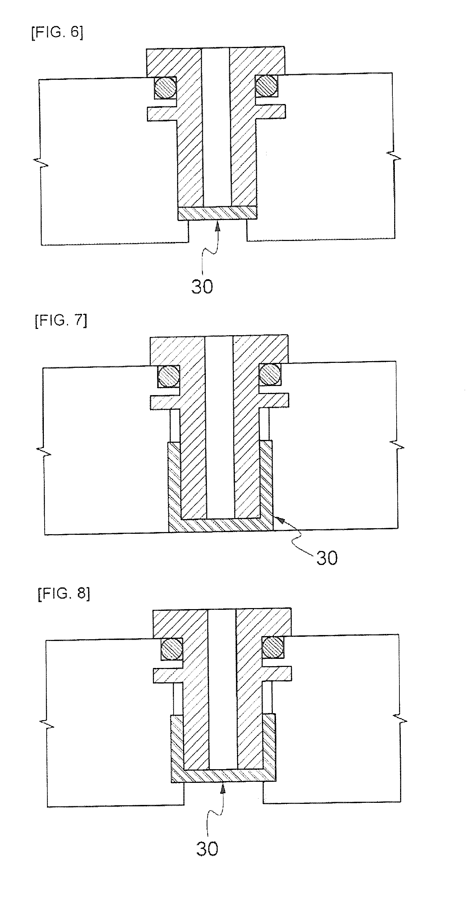

FIG. 6 is a cross-sectional view showing a configuration in accordance with an embodiment of the present invention.

Referring to FIG. 6, the barrier may be coupled to the bottom surface of the bolt to seal the outlet. At this time, as shown in the drawing, a projecting portion is provided in a lower end portion of the case to be in contact with a bottom surface of the barrier. As the bolt is fixed to the case, the barrier is closely adhered to the projecting portion with a predetermined pressure so that it is possible to prevent gas inside the energy storage device from leaking through a gap between the bolt and the case without a separate O-ring.

FIG. 7 is a cross-sectional view showing a configuration in accordance with an embodiment of the present invention.

Referring to FIG. 7, the barrier may be coupled to the entire bottom surface and all or a portion of side surfaces of the bolt. At this time, as shown in the drawing, the bolt insertion hole 24 of the case is not in direct contact with the bolt but closely adhered to the barrier coupled to the side surfaces of the bolt with a predetermined pressure so that it is possible to prevent the gas inside the energy storage device from leaking through the gap between the bolt and the case without a separate O-ring.

FIG. 8 is a cross-sectional view showing a configuration in accordance with an embodiment of the present invention.

Referring to FIG. 8, the barrier may be coupled to the entire bottom surface and all or a portion of the side surfaces of the bolt. At this time, as shown in the drawing, the projecting portion is provided in the lower end portion of the case to be in contact with the bottom surface of the barrier. As the bolt is fixed to the case, the barrier is closely adhered to the projecting portion with a predetermined pressure so that it is possible to prevent the gas inside the energy storage device from leaking through the gap between the bolt and the case without a separate O-ring.

In case of the embodiments shown in FIGS. 6 to 8, it is preferred that the barrier is made of an elastic rubber material.

Further, the barrier may be made of corrosion-resistant rubber, and at this time, when the barrier is too thin, the barrier may be damaged in the process of coupling the bolt and the degree of blocking of the barrier for blocking the gas inside the energy storage device may be insufficient. Further, when the barrier is too thin, although the gas inside the energy storage device is in a normal range, the barrier is ruptured so that the gas inside the energy storage device may be leaked. Further, when the barrier is too thick, although internal pressure of the energy storage device is excessively increased, the barrier is not ruptured so that there is a risk that the entire energy storage device is damaged. Accordingly, it is preferred that a thickness of the barrier made of corrosion-resistant rubber is 5 to 100µm in consideration of the above facts.

Meanwhile, the barrier may be made of an aluminum foil with a thickness of 10 to 100µm.

Further, the O-ring may be made of a butyl material.

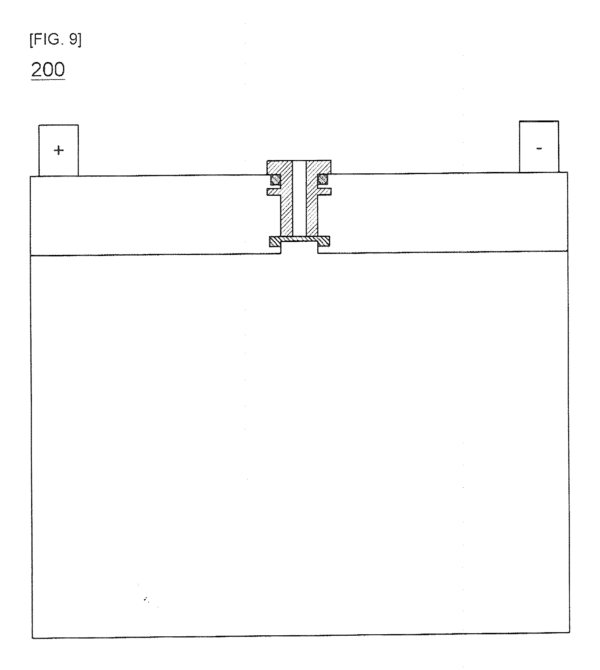

FIG. 9 is a view showing an example in which the gas venting structure for an energy storage device in accordance with an embodiment of the present invention is applied to an energy storage device.

Referring to FIG. 9, a typical energy storage device has a structure in which a module such as a secondary battery or a supercapacitor including a cathode, an anode, an electrolyte, and a separator is inserted in a case to be sealed, and the cathode and the anode are connected to a (+) terminal and a (-) terminal, respectively.

At this time, since the gas venting structure for an energy storage device in accordance with an embodiment of the present invention is provided in the case, which constitutes a top surface of the energy storage device, when the internal pressure is increased to more than a predetermined pressure due to the gas generated inside the energy storage device, the barrier is ruptured to vent the gas.

Therefore, since the gas venting structure for an energy storage device in accordance with an embodiment of the present invention can be implemented only with minimum components and has a simple structure, it is possible to secure price competitiveness by reducing manufacturing costs of the energy storage device while improving manufacturing efficiency of the energy storage device.

The present invention configured as above can improve reliability of an energy storage device and extend a life of the energy storage device by appropriately preventing a rise of internal gas due to gas generated inside the energy storage device only with minimum components and simple structure.

The foregoing description illustrates the present invention. Additionally, the foregoing description shows and explains only the preferred embodiments of the present invention, but it is to be understood that the present invention is capable of use in various other combinations, modifications, and environments and is capable of changes and modifications within the scope of the inventive concept as expressed herein, commensurate with the above teachings and/or the skill or knowledge of the related art. The embodiments described hereinabove are further intended to explain best modes known of practicing the invention and to enable others skilled in the art to utilize the invention in such, or other, embodiments and with the various modifications required by the particular applications or uses of the invention. Accordingly, the description is not intended to limit the invention to the form disclosed herein. Also, it is intended that the appended claims be construed to include alternative embodiments.

## Claims

1. A gas venting structure for an energy storage device comprising:
a bolt consisting of a body and a head and having an outlet inside to pass gas therethrough;
a case having a bolt insertion hole inside to insert the bolt therein; and
a barrier coupled with the case to block the outlet of the bolt.

2. The gas venting structure for an energy storage device according to claim 1, wherein a coupling portion is further provided on an outer surface of the body of the bolt to couple the bolt and the case, and a coupling groove is further provided on an inner surface of the case to be coupled with the coupling portion.

3. The gas venting structure for an energy storage device according to claim 1, wherein engaging projections are provided at both ends of the barrier, and concave grooves are formed in the case to insert the engaging projections therein.

4. The gas venting structure for an energy storage device according to claim 1, wherein the barrier is made of a metal or synthetic resin material.

5. The gas venting structure for an energy storage device according to claim 1, wherein an O-ring is further provided between the head of the bolt and a connecting portion of the case.

6. The gas venting structure for an energy storage device according to claim 1, wherein the barrier is coupled to a bottom surface of the bolt to seal the outlet.

7. The gas venting structure for an energy storage device according to claim 6, wherein the barrier is coupled to the entire bottom surface and all or a portion of side surfaces of the bolt to seal the outlet.

8. The gas venting structure for an energy storage device according to claim 1, wherein the O-ring is made of a butyl material.

9. The gas venting structure for an energy storage device according to claim 1, wherein the barrier is made of an aluminum foil with a thickness of 10 to 100µm or corrosion-resistant rubber with a thickness of 5 to 100µm.

10. An energy storage device comprising a gas venting structure for an energy storage device according to one of claims 1 to 10.
